# EUROPEAN PATENT SPECIFICATION

(11) **EP 2 862 336 B1**
(45) Date of publication and mention of the grant of the patent: **28.09.2016**
(21) Application number: 12730316.2
(22) Date of filing: 13.06.2012
(51) Int. Cl.: H04L 29/08, G06F 9/00, H04M 1/00, H04W 4/00, H04W 88/06, H04W 48/18

(54) **CLOUD SERVICES IN MOBILE HETEROGENEOUS NETWORKS**
CLOUD-DIENSTE IN MOBILEN HETEROGENEN NETZWERKEN
SERVICES EN NUAGE DANS DES RÉSEAUX HÉTÉROGÈNES MOBILES

(43) Date of publication of application: 22.04.2015
(73) Proprietor: Nokia Technologies Oy, 02610 Espoo (FI)
(72) Inventor: YILMAZ, Osman, FIN-02150 Espoo (FI); WIJTING, Carl, FIN-02150 Espoo (FI); LUNDEN, Petteri, FIN-02150 Espoo (FI)
(74) Representative: Seppo Laine Oy
(86) International application number: PCT/US2012/042296
(87) International publication number: WO 2013/187892

(56) References cited:
- US-A1- 2004 131 078
- US-A1- 2008 081 605
- US-A1- 2011 268 000

## Description

### FIELD

The subject matter described herein relates to wireless communications.

### BACKGROUND

A femtocell base station is a cellular base station configured for a small cell, or coverage area, examples of which include a residence, a small business, a building, or a small area. As such, the femtocell base station, such as for example a home base station (HNB) or a home E-UTRAN (evolved Universal Mobile Telecommunications System Terrestrial Radio Access Network) Node B base station (HeNB), may have functionality similar to a typical base station, such as an E-UTRAN Node B (eNB) base station, but the femtocell base station may have less range and power given its limited intended coverage area. For example, the femtocell base station may have power sufficient for a cell serving wireless devices within a limited range of about tens of meters.

Picocell base stations are another example of a small cell base station, but picocell base stations, especially if deployed outdoors, may have somewhat greater range serving a small area on the order of about 100-200 meters. Accordingly, wireless service providers view the femtocell base station and the picocell base station as a way to extend service coverage into a small cell, as a way to offload traffic to the femtocell/picocell base station, and/or as a way to provide enhanced service, such as higher data rates and the like, within the small cell, when compared to the larger macro cell served by a typical base station, such as the eNB base station.

Document US2004/131078 discloses a method for supporting multiple wireless technologies within a device, wherein a connection is selected based on a quality of service policy and/or a user preference. Document US2011/268000 discloses a method for power management on mobile devices, wherein a connection is selected based on a quality of service requirement and/or a battery level remaining in the mobile device. Document US2008/081605 discloses a connection manager with location learning, wherein a connection is selected based on parameters including availability, user preferences, bandwidth, application requirements and device resources.

### SUMMARY

The invention is defined in independent claims 1, 5 and 9. Methods and apparatus, including computer program products providing cloud services in mobile heterogeneous networks are disclosed. In one aspect, there is provided a method. The method may include receiving, at a selector, data representative of at least one of a quality of service requirement and a user preference associated with an application at a user equipment, wherein the selector comprises middleware interfacing the application with at least one connection; selecting, at the selector and based on the received data, the at least one connection to provide the application access to a service; and initiating, at the selector, establishment of the at least one connection to provide the application access to the service to enable a synchronization between the application and the service.

In another aspect, there is provided an apparatus. The apparatus may include at least one processor; and at least one memory including code which when executed by the at least one processor causes operations which may include receiving, at a selector, data representative of at least one of a quality of service requirement and a user preference associated with an application at a user equipment, wherein the selector comprises middleware interfacing the application with at least one connection; selecting, at the selector and based on the received data, the at least one connection to provide the application access to a service; and initiating, at the selector, establishment of the at least one connection to provide the application access to the service to enable a synchronization between the application and the service. In some example embodiments, one of more variations may be made as well as described in the detailed description below and/or as described in the following features.

In yet another aspect, there is provided a computer-readable medium. The computer-readable medium may include code which when executed by at least one processor causes operations which may include receiving, at a selector, data representative of at least one of a quality of service requirement and a user preference associated with an application at a user equipment, wherein the selector comprises middleware interfacing the application with at least one connection; selecting, at the selector and based on the received data, the at least one connection to provide the application access to a service; and initiating, at the selector, establishment of the at least one connection to provide the application access to the service to enable a synchronization between the application and the service. In some example embodiments, one of more variations may be made as well as described in the detailed description below and/or as described in the following features.

In some example embodiments, one of more variations may be made as well as described in the detailed description below and/or as described in the following features. The data may further include at least one of a speed of the user equipment, a location of the user equipment, a received signal quality of an access point, and a periodic performance indicator. The service may include a remote service accessible coupled to the Internet. The at least one connection may be selected from among a plurality of wireless connections each coupling the user equipment to an access point further coupled by at least the Internet to the service. The selector may determine, based on the data, a schedule of when to initiate the synchronization. The selector may determine, based on the data, a prediction of a future availability of the at least one connection, when the schedule for the synchronization is determined. The synchronization may be initiated,
based on the prediction of the future availability of the at least one connection, at least one of before or after another application at the user equipment.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### DESCRIPTION OF DRAWINGS

In the drawings,
FIG. 1 depicts an example of a system configured to provide cloud services in heterogeneous networks, in accordance with some example embodiments;
FIG. 2 depicts another example a system configured to provide cloud services to a user equipment, in accordance with some example embodiments;
FIG. 3 depicts an example of middleware, in accordance with some example embodiments;
FIG. 4 depicts an example of a process, in accordance with some example embodiments;
FIG. 5 depicts an example of an access point, in accordance with some example embodiments; and
FIG. 6 depicts an example of a radio such as a user equipment, in accordance with some example embodiments.

Like labels are used to refer to same or similar items in the drawings.

### DETAILED DESCRIPTION

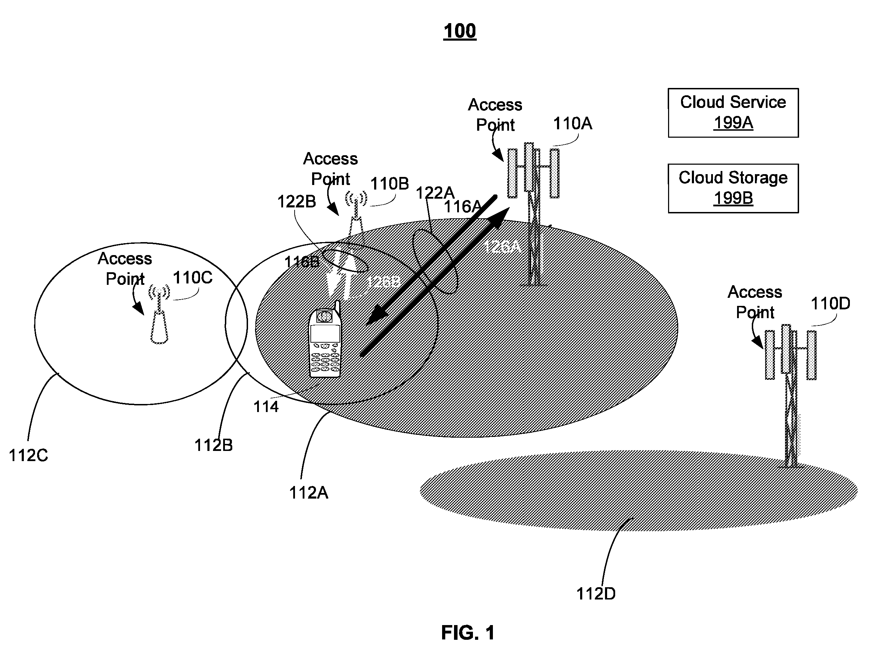

FIG. 1 depicts an example of a system 100 according to some example embodiments. System 100 may include one or more user equipment, such as user equipment 114, one or more access points 110A-D, and cells 112A-D. Access point 110A may be configured to serve cell 112A; access point 110B may serve a small cell, such as a picocell or a femtocell 112B; access point 110C may serve small cell 112C; access point 110D may serve macrocell 112D. In some example embodiments, the access points 110A and 110D may be implemented as cellular bases stations, such as evolved Node B (eNB) base stations, serving macrocells, and access points 110B and 110C may be implemented as wireless network access points, such as WiFi network access points, home base stations, and the like, serving small cells. The access points 110-D may be further coupled to other networks providing access to a so-called "cloud" including a cloud service 199A and/or a cloud storage 199B.

In some example embodiments, user equipment 114 may determine whether to couple to cloud services 199A and/or cloud storage 199B via one or more links to wireless network access points or via one or more links to cellular bases stations, such as evolved Node B (eNB) base stations. Moreover, the user equipment may include middleware. The middleware may be configured to determine one or more factors, such as quality of service requirements for the cloud service 199A, quality of service requirements for cloud storage 199B, user preferences, and the like. Moreover, the middleware may, based on the determined factors, select a connection from one or more access points (e.g., selecting to transmit data to the cloud via access point 110B or access point 110A).

In some example embodiments, user equipment 114 may be implemented as a user equipment and/or a stationary device. The user equipment 114 is often referred to as, for example, a mobile station, a mobile unit, a subscriber station, a wireless terminal, a tablet, a smart phone, or the like. A user equipment may be implemented as, for example, a wireless handheld device, a wireless plug-in accessory, or the like. In some example embodiments, user equipment may include a processor, a computer-readable storage medium (e.g., memory, storage, and the like), a radio access mechanism, and/or a user interface. For example, the computer-readable storage medium may include instructions which when executed provides one or more applications, such as a browser, a thin client providing access to storage or services 199A-B, middleware (described further below), and the like.

In some example embodiments, the user equipment 114 may be implemented as a multi-mode user device configured to operate using a plurality of radio access technologies. For example, user equipment 114 may be configured to operate using a plurality of radio access technologies including one or more of the following: Long Term Evolution (LTE), wireless local area network (WLAN) technology, such as 802.11 WiFi, 802.16 WiMAX, Bluetooth, and any other radio access technologies. Moreover, the user equipment 114 may be configured to have established connections to access points using the plurality of the radio access technologies. For example, user equipment 114 may couple to cellular base station 110A based on a cellular standard, such as LTE and couple to wireless access point 110B based on another radio access technology, such as WiFi.

The access points configured as base stations, such as access points 110A and 110D, may, in some example embodiments, be implemented as an evolved Node B

(eNB) type base station, although other types of radio access points may be implemented as well. When the evolved Node B (eNB) type base station is used, the base station may be configured in accordance with standards, including the Long Term Evolution (LTE) standards, such as 3GPP TS 36.201, Evolved Universal Terrestrial Radio Access (E-UTRA); Long Term Evolution (LTE) physical layer; General description, 3GPP TS 36.211, Evolved Universal Terrestrial Radio Access (E-UTRA); Physical channels and modulation, 3GPP TS 36.212, Evolved Universal Terrestrial Radio Access (E-UTRA); Multiplexing and channel coding, 3GPP TS 36.213, Evolved Universal Terrestrial Radio Access (E-UTRA); Physical layer procedures, 3GPP TS 36.214, Evolved Universal Terrestrial Radio Access (E-UTRA); Physical layer - Measurements, and any subsequent additions or revisions to these and other 3GPP series of standards (collectively referred to as LTE standards).

In some example embodiments, the access points, such as access points 110B-C, may be configured to serve small cells. The access points 110A-D may also be configured to serve a cell using a WLAN technology, such as WiFi (e.g., the IEEE 802.11 series of standards), WiMAX (e.g., the IEEE 802.16) and any other radio access technology capable of serving a cell such as cell 112A or other cell. Access point 110B may, in some example embodiments, be implemented to serve a small cell, such as femtocell 112B. Moreover, access point 110B may be configured to operate with a plurality of radio access technologies including LTE, WiFi, Bluetooth, Bluetooth low energy (BT-LE), and/or any other wireless local area network standards. In some example embodiments, the access point 110B may be implemented as a home evolved node B (HeNB) base station serving femtocell 112B, which covers a structure or a predefined area, such as a home, an office building, and the like, although access point 110B may also be implemented as a cellular base station as well.

In some example embodiments, system 100 may include access links, such as links 122A-B. The access links 122A may include a downlink 116A for transmitting to the user equipment 114 and an uplink 126A for transmitting from user equipment 114 to the access point 110A. The downlink 116A may comprise a modulated radio frequency carrying information, such as user data, radio resource control (RRC) messages, location information, and the like, to the user equipment 114, and the uplink 126A may comprise a modulated radio frequency carrying information, such as user data, RRC messages, location information, measurement reports associated with handovers, and the like, from the user equipment 114 to access point 110A. Access links 122B may include downlink 116B for transmitting from the access point 110B to user equipment 114, and uplink 126B for transmitting from user equipment 114 to access point 110B.

The downlink 116A and uplinks 126A may, in some example embodiments, each represent a radio frequency (RF) signal. The RF signal may, as noted above, include data, such as voice, video, images, Internet Protocol (IP) packets, control information, and any other type of information and/or messages. For example, when LTE is used, the RF signal may use OFDMA. OFDMA is a multi-user version of orthogonal frequency division multiplexing (OFDM). In OFDMA, multiple access is achieved by assigning, to individual users, groups of subcarriers (also referred to as subchannels or tones). The subcarriers are modulated using BPSK (binary phase shift keying), QPSK (quadrature phase shift keying), or QAM (quadrature amplitude modulation), and carry symbols (also referred to as OFDMA symbols) including data coded using a forward error-correction code. The subject matter described herein is not limited to application to OFDMA systems, LTE, LTE-Advanced, or to the noted standards, specifications, and/or technologies. Furthermore, the downlink 116B and uplink 126B may be configured using standards and/or technologies similar to those noted with respect to downlink 116A and uplink 126A, although downlink 116B and uplink 126B may use a different standards or technologies as well. In addition, each access link may be unidirectional or bidirectional.

Although FIG. 1 depicts a specific quantity and configuration of cells, access points, and user equipment, other quantities and configurations may be implemented as well.

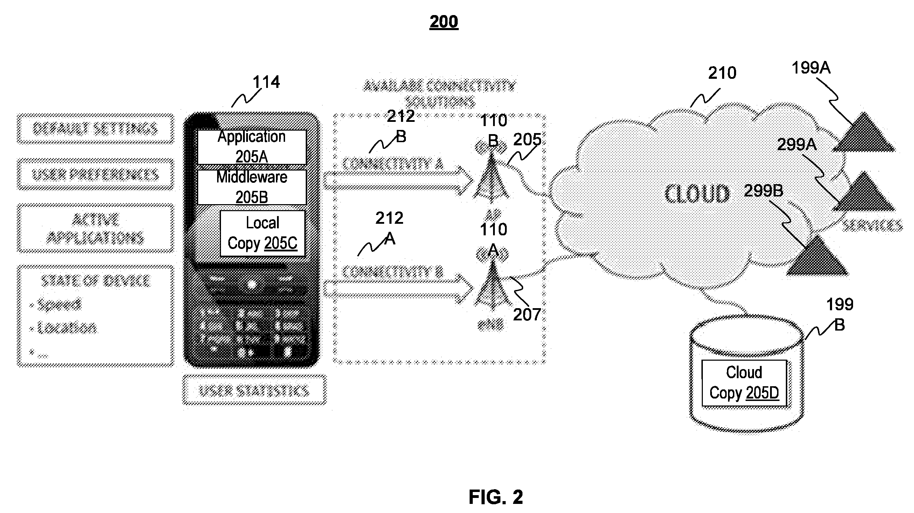

FIG. 2 depicts an example of a system 200 according to some example embodiments. The description of system 200 also refers to FIG. 1.

In some example embodiments, system 200 may include user equipment 114 configured to access via connection 212A or 212B one or more wired and/or wireless networks, such as cloud 210, coupled to one or more services. These services may include cloud services 199A and/or 299A-B and one or more storage services, such as cloud storage 199B.

In some example embodiments, user equipment 114 may include one or more applications, such as application 205A, and a middleware 205B configured to determine one or more factors and based on the determined factors, select one of the connections 212B via the access point 110B (e.g., WiFi wireless network access point) or connection 212A via access point 110A (e.g., cellular base station). For example, application 205A may store data at cloud storage 199B and/or access a cloud service 199A. To further illustrate, application 205A may correspond to a photo sharing application accessed and/or stored in the cloud (although other types of applications may be used as well). In this example, application 205A may store a local copy 205C of photos and attempt to synchronize to the cloud storage 199A by obtaining an updated copy 205D of the photos. As such, middleware 205B may determine, based on one or more factors, whether to access cloud storage 199B via connection 212B (e.g. a link to a wireless network access point 110B) or connection 212A (e.g. a cellular link to base station 110A), when application 205A synchronizes to (e.g., accesses, obtains data, and the like) a service in the cloud, such as cloud storage 199B and/or service 199A.

Middleware 205B may consider one or more factors when determining which connection 110A-B to use to allow applications at user equipment to synchronize to the cloud. For example, middleware 205B may consider data, such as quality of service requirements of the application 205A, cloud storage 199B, and/or cloud service 199A (e.g., delay, data rate, and the like), preferences of a user of user equipment 114 (e.g., battery lifetime, reducing service fees/costs associated with the connections, and the like), default settings at the user equipment, and other context information, such as speed of the user equipment, location of the user equipment, and the like. Middleware 205B may receive information representative of one or more factors and combine the factors (e.g., scale, weight the factors, and then combine) to determine whether to access cloud storage 199B and/or cloud service 199 via local connection 212B (which in this example may a less costly, higher data rate WiFi connection to access point 110B) or connection 212A. This determination of which connection to use may be performed when application 205A attempts to synchronize to the cloud, such as cloud storage 199B and/or a cloud service 199A. In some example embodiments, middleware 205B may enable application 205A to operate in a heterogeneous network environment in which access to the network is provided by small cells and macrocells, although other types of networks and cells may be used as well.

In some example embodiments, middleware 205B may consider data, including the user equipment's speed and location. When this is the case, the user equipment's speed and location may be determined by one or a combination of using a global positioning system (GPS) receiver embedded in the user equipment and using signal strength and delay information from multiple cells, or by estimating the user equipment's speed and location based on a number of cell changes within a certain time window sometimes referred to as mobility state estimation. Other mechanisms may also be used to determine speed and location.

In some example embodiments, middleware 205A may determine a relative cost to use local connection 212B (which in this example may be a less costly, higher data rate WiFi connection to access point 110B) and a relative cost of using cellular connection 210A, and based on the determined cost, select connection 212A or 212B, when an application attempts to synchronize to the cloud, such as cloud storage 199B and/or a cloud service 199A. In this example, cost may include a financial cost (e.g., connection charges imposed on the link) and/or a non-monetary cost (e.g., power consumption, data latency, and the like).

In some example embodiments, cloud 210 may provide to user equipment 114 services, such as cloud services 199A, 299A-B and cloud storage 199B. The cloud services may include social networking, photo sharing, video sharing, email, business applications, texting, data back-up, music, navigation, software updates, cloud computing (e.g., where a task is done in the cloud), and any other service provided at a remote location via a cloud, such as the Internet. Data storage 199B may include storage of documents, music files, audio files, photos, video, email, voicemail, database files or any other information. In some example embodiments, cloud 210 may include a load balancer to select from among one or more storage devices, such as storage 199B. Cloud copy 205D may include storage at a one or more locations, which may be distributed. Cloud copy 205D may be stored at a server, a client, a computer system, or a dedicated storage device. In some example embodiments, a local copy 205C may be stored in user equipment 114, and the local copy 205C may be synchronized with a copy stored via cloud 210 (e.g., cloud copy 205D).

In some example embodiments, services 199A and/or 299A-B may comprise web-based services accessible to user equipment 114 via a web browser, a thin-client, and/or other application such as application 205A. The services 199A and/or 299A-B may also include commands and/or instructions that may be executed by user equipment 114.

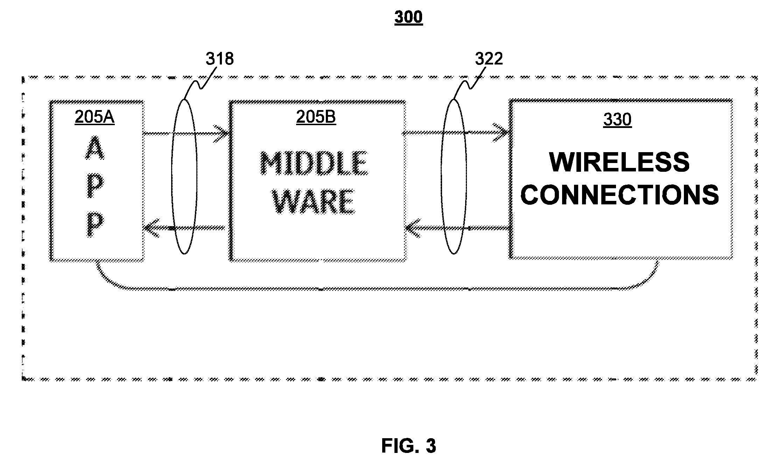

FIG. 3 depicts an example of application 205A, middleware 205B, and wireless connections 330 (e.g., connections 212A, 212B, and the like), in accordance with some example embodiments. The description of FIG. 3 also refers to FIGs. 1 and 2.

In some example embodiments, application 205A may be an application stored in at least one computer-readable medium including code and executed by at least one processor at user equipment 114. Furthermore, application 205A may access cloud 210 for services, such as data storage and the like. Examples of applications include email applications, document applications, file applications, database applications, and the like.

In some example embodiments, application 205A may seek to synchronize data from a service, such as cloud storage 199B, and the like. Moreover, application 205A may perform the synchronization with cloud 210 to synchronize data, such as local copy 205C with cloud copy 205D. Synchronization may also include transferring data files from the user equipment 114 to cloud storage 199B or updating data files at cloud storage 199B with data files stored at user equipment 114. Synchronization may also include transferring data files from cloud storage 199B to the user equipment 114 or updating data files at user equipment 114 with data files stored at cloud storage 199B. Synchronization may also include data related to programs or applications running on user equipment 114 or data related to a service such as one of services 199A, or 299A-B running on cloud 210. In some example embodiments, user equipment 114 may include multiple applications and/or services that require synchronization. The order of synchronization may be determined by middleware 205B based on user preferences, quality of service requirements, characteristics of the available connections, and/or the like. For example, the order of the synchronization of tasks may be different depending upon whether the connection is a low data rate connection or a high data rate connection. For example, large synchronization tasks may be deprioritized when using a low data rate connection.

In some example embodiments, middleware 205B and application 205A may couple via an interface 318. Interface 318 may support data sent from applications 205A to middleware 205B and support data sent from middleware 205B to applications205A. The data exchanged between applications 205-A and middleware 205B may include any type of data (also referred to herein as factors), which may enable middleware 205B to determine which connection 212A or 212B to select for application 205A. For example, the data may include quality of service requirements of the application 205A and the like. Moreover, middleware 205B may include other interfaces to other portions of user equipment 114 or the network to obtain other data (also referred to herein as factors), such as delay, data rate, user preferences, battery lifetime, service fees, default settings, context information, and the like.

To illustrate by way of an example, user equipment 114 may be configured to access service 299A (e.g., check for new email every 15 minutes). In this example, application 205A, such as an email application, may communicate over interface 318 to middleware 205B to request email synchronization every 15 minutes. Each application at user equipment 114 may also have associated synchronization requirements in the cloud. Interface 318 may be an application programming interface (API) including specifications for routines, data structures, object classes, and/or variables. For example, interface 318 may conform to an international standard, Microsoft Windows API, or the libraries of a programming language such as a C, C++, Java or other programming language. Interface 318 may also comprise a hardware interface, such as an industry standard or proprietary interface.

In some example embodiments, middleware 320 may couple via interface 322 to wireless connections 330. For example, middleware 320 may select, as noted above, from among wireless connections, such as access point 110A, access point 110B, and the like, to provide application 205A access to cloud 210, cloud storage 199B, and/or services 199A, 299A-B. To further illustrate with an example, when user equipment 114 is in a heterogeneous network having access to access points 110A and 110B, middleware 205B at user equipment 114 may select for one or more applications, such as applications 205A, whether to use access point 110B (e.g. a wireless network access point) or access point 110A (e.g. a cellular base station) or a combination thereof. For example, middleware 205B may select access point 110B (which may be a high data rate WiFi connection with little, if any, connection fee), while access point 110A may be a cellular connection which may be slower than the WiFi connection and impose higher connection charges. Moreover, if a user at user equipment 114 has set a preference to use, when available, a certain type of wireless access, such as WiFi provided via access point 110B, middleware 205B may select the WiFi provided via access point 110B, over base station 110A, although other selection schemes may be implemented by middleware 205B as well.

To illustrate by way of another example, access point 110B may provide wireless access using WiFi, and access point 110A may provide data services over a cellular network. In this example, if the user equipment uses WiFi, more battery power may be consumed than if the cellular data services to the base station is used. If the user has set a preference to use the available service that consumes the least battery power, middleware 205B may select connection 212A to the base station 110A, rather than connection 212B to WiFi access point 110B.

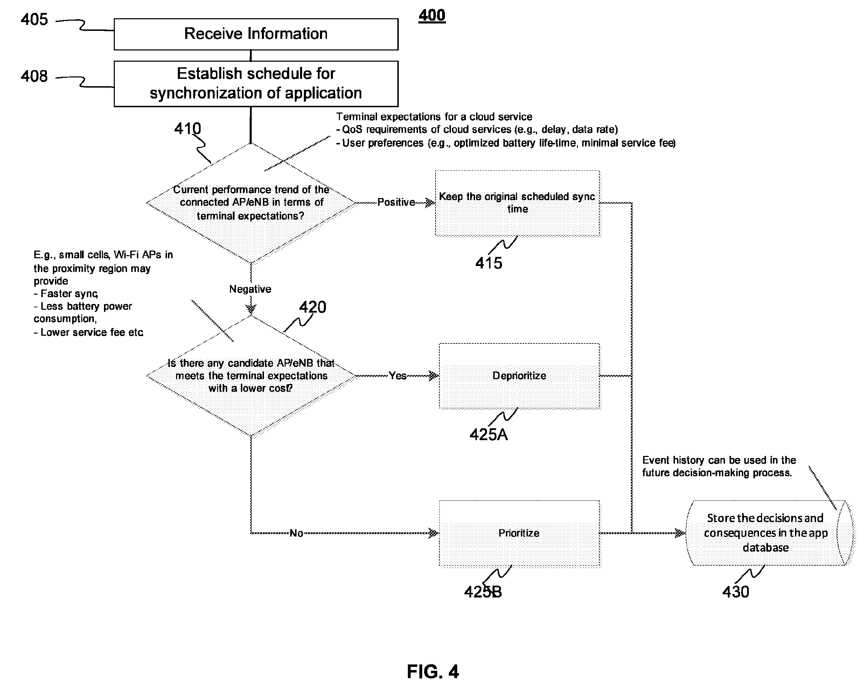

FIG. 4 depicts a process 400 that may be implemented at user equipment 114, in accordance with some example embodiments. The description of process 400 also refers to FIGs. 1, 2 and 3.

In some example embodiments, one or more applications, such as application 205A, may be so-called "virtualized" in the cloud. When this is the case, the application may need to synchronize with (e.g., access, obtain, etc.) a service in the cloud, such as cloud storage 199B and the like.

To enable synchronization, middleware 205B may be used to select a connection for the application based on data related to one or more factors: quality of service requirements, preferences of a user of user equipment 114, default settings at the user equipment, and other context information, such as speed of the user equipment, location of the user equipment, and the like. For example, middleware 205B may receive one or more of the following data: user preference information; signal quality and/or signal power information representative of access points/base stations available for connection; quality of service requirements of the application, the cloud service, and/or the cloud storage; the state of the application, the access point; periodic performance indicators, and the like. Periodic performance indicators may represent signal quality measurements done by the user equipment from time to time. Quality measurements may include signal strength, signal quality, signal-to-interference ratio, and/or the like.

In some example embodiments, middleware 205B may also monitor the trend of the quality measurements to determine (e.g., predict, estimate, and the like) a signal quality at a future time (referred to as future signal quality). For example, if the signal strength of a serving cell has been unchanged for a several minutes, middleware 205B may determine that the connection will be available for some time in the future. This prediction of future availability of the connection by middleware 205B may result in middleware 205B making changes to the synchronization schedule to take advantage of the predicted availability of the connection. For example, middleware 205B may predict the continued availability of a high data rate connection allowing a change to the schedule of a synchronization task requiring a high data rate connection to an earlier time. Furthermore, if the current connection offers unusually high capacity, a large low priority task may be initiated earlier, taking advantage of the opportunity.

In some example embodiments, middleware 205B may schedule when the applications synchronize with the service in the cloud, and, when a plurality of applications are at user equipment 114, middleware 205B may prioritize the order in which the applications synchronize with the services and/or storage in the cloud.

In some example embodiments, middleware 205B may receive, at 405, data, such as information representative of quality of service information, user preferences, and the like associated with application 205, access points, user equipment 114, cloud service 199A, and/or cloud storage 199B. The received information may also include quality service trend information including past and current quality of service measurements representative of signal power and/or signal quality (e.g., reference signal received power (RSRP), reference signal received quality (RSRQ), and the like) of the one or more connections available at wireless connections 330. The state, such as the load on the access point and the access mode (e.g. closed or open, free or paid and if a paid access mode the associated costs), of the available access points/base stations may also be used in the selection.

Based on the received information, the middleware 205B may select a connection (e.g., select between connection 210A and 210B as described above) and/or determine when (e.g., schedule, prioritize, and the like) the application's access and/or synchronize with the service and/or storage in the cloud. In some example embodiments, trends with respect to, for example, quality of service and the like may also be taken into account, when selecting a connection, scheduling/prioritizing, and the like. For example, middleware 205B may track quality of service indicators and/or measurements (e.g., RSRP) for both connected cell(s) and candidate cell(s) to determine trends in the quality of service. The quality of service trend information may include historical information, although a single, current quality of service value may be used to assess a trend. The trends may allow middleware 205B to prioritize the order of the synchronization tasks associated with applications at user equipment 114. To illustrate further, if there is a broadband synchronization task to be initiated in a short timeframe, but the trend of signal strength indicates that the user equipment will be handed over from an base station serving an LTE cell to another base station serving a less capable GSM-Edge cell before the synchronization task is initiated (or before completion), then middleware 205B may prioritize the broadband synchronization task to be complete in the current LTE cell. In this example, middleware 205B may also de-prioritize other synchronization tasks with lower data rate requirements so that these other tasks take place at another time, such as after the handover to the lower capability cell.

In some example embodiments, the trend of signal strength may be assessed by middleware 205B based on a currently available data rate. For example, the middleware 205B may, based on quality of service trend information, handover history information, location information for the user equipment (e.g., route, movement, and/or speed), and the like, determine whether the user equipment is expected to leave a cell providing a high data rate connection before a broadband task, such as a synchronization by the application 205A, is to be started (or completed). The middleware 205B may then prioritize the synchronization task so that it can be started and/or completed before the handover (e.g., by prioritizing the scheduling the synchronization task earlier than originally scheduled). Location and speed information regarding the user equipment may be used by middleware 205B to predict the availability of future available connections without directly sensing the corresponding access point. For example, if the user has been connected to a Wi-Fi access point sometime earlier, then middleware 205B may predict based on location information about the access point and the user equipment that user equipment 114 may be able to connect to the same Wi-Fi access point at a later time.

In some exemplary embodiments, the user equipment including middleware 205B may receive information to enable determining near-by cells and the serving access points (e.g., base stations, home base stations/eNBs, Wi-Fi access points, and the like). This received information may include location information, radio measurement fingerprints, direct detection of cells, and the like. The expected connection time and quality of service performance of a candidate cell (for a connection or a handover) may be estimated based on the stored connection and performance history at the user equipment including middleware 205B, although other information may be used as well (e.g., speed or mobility state of the user equipment). This received information may also be used to schedule and/or reprioritize the synchronization between the applications at the user equipment and the cloud (which may also take into account defined cloud service requirements, such as low delay, and user preferences, such as a minimal service-fee, minimal battery power consumption, and/or minimal latency).

Middleware 205B may receive information and/or may track the relative geographic position of target access points (e.g., enhanced node B base stations (eNB), Wi-Fi access points, etc.) near user equipment 114 that are not currently serving the user equipment 114. In some example embodiments, the relative geographic position of these target access points is determined based on known location information about access points in addition to location information from a global positioning system receiver embedded in user equipment 114. Nearby access points may also be determined by measurement of radio fingerprints or by direct detection of cells.

Whether an access point is a target for a handover may be a function of mobility in some example embodiments. For example, a fast moving user equipment may exit a serving cell faster than a slower moving or stationary user equipment. This mobility information may be used by the middleware 205B to select a target access point, when application 205A needs to synchronization to the cloud.

At 408, middleware 205B may establish a schedule for when one or more applications at the user equipment couple via connections, such as 212A, 212B, and the like, to cloud 210 including a cloud service and/or cloud storage, in accordance with some example embodiments. In some example embodiments, the schedule defining the time and/or order may be adjusted based on the expectations of the user equipment. For example, if application 205A has a synchronization task requiring a high data rate, and the task is scheduled for future synchronization and the trend of signal strength indicates that the user equipment will be handed over from a base station supporting high data rates (e.g., LTE cell) to a base station supporting lower data rates (e.g., GSM-Edge cell), then this high data rate synchronization task may be elevated in priority (e.g. prioritized) so that it can be completed before the handover. Synchronization tasks with lower data rate requirements may be postponed (or de-prioritized). Based on data, such as handover history information, traveled route, speed, or other information, if the user equipment is expected to leave a cell with a high data rate connection before an applications synchronizes with the cloud, the application's 205A synchronization task may be elevated in priority (e.g., started earlier than previously scheduled in order to complete the task before leaving the cell with the high data rate).

At 410, middleware 205B may evaluate information received at 405, such as quality of service trends, user preferences, and the like, in accordance with some example embodiments. For example, if the quality of service trend in a current cell serving user equipment 114 will support (positive at 410) a quality of service (or user preference, and the like) defined for the application, the cloud service, and/or the cloud storage, then middleware 205B may maintain, at 415, the schedule for the synchronization task with the cloud 210 including a cloud service and/or cloud storage via access point 110A or access point 110B. Middleware 205B may request that application 205A provide data earlier than scheduled if doing so would provide a better quality of service and can be supported by the selected connection.

However, if the quality of service trend in a current cell serving user equipment 114 will not support (negative at 410) a quality of service, user preference, and the like defined for the application, middleware 205B may determine, at 420, if a target wireless access point or target base station can meet the quality of service, user preference, and the like, at a lower cost, such as lower service charge, lower bandwidth, lower data rate, and/or any other metric. If an access point at a lower cost is available for connection, middleware 205B may reschedule a corresponding synchronization task at 425A (labeled deprioritize) so that the synchronization task for the application 205A is performed via an access point (wireless network access point or cellular base station) having a lower cost but satisfying the required quality of service requirements, user preferences, and the like. If an access point at a lower cost is not available for connection, middleware 205B may reschedule or prioritize a corresponding synchronization task at 425B so that the synchronization task for the application 205A is performed via an access point which may have a higher cost but satisfies the required quality of service requirements, user preferences, and the like.

At 430, user equipment 114 may store the synchronization schedules and associated selected wireless services, quality or service information and trends, and position information and speed in an application database to enable a determination of future connection predictions and selections, in accordance with some example embodiments. For example, the connection history information in a database accessible by middleware 205B may be used by middleware 205B to determine trends, such as predictions. To illustrate further, if, for example, the connection history database includes trend information showing that a certain connection has provided stable service for a certain period (e.g., 5 minutes) with suitable received signal quality, middleware 205B may predict that the connection may be used in the future, but if the connection history shows that service usually drops after for 5 minutes, middleware 205B may make a prediction that the connection will not be available after 5 minutes. The database may thus be used by middleware 205B to determine when to adjust the schedule of a synchronization task to take advantage of immediate opportunity, or to keep the original synchronization schedule.

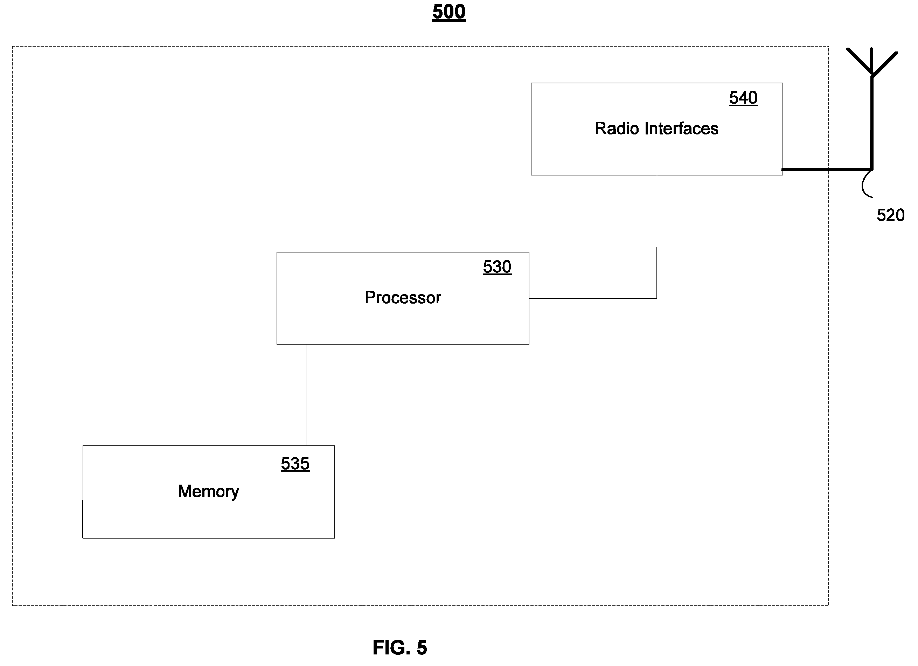

FIG. 5 depicts an example implementation of an access point, such as access points 110A-D. The access point may include one or more antennas 520 configured to transmit via a downlink and configured to receive uplinks via the antenna(s) 520. The access point may further include a plurality of radio interfaces 540 coupled to the antenna 520. The radio interfaces may correspond to a plurality of radio access technologies including, LTE or any other cellular technology, WLAN technology, such as WiFi (e.g., the IEEE 802.11 series of standards), WiMAX (e.g., the IEEE 802.16 family of standards), Bluetooth, RFID, UWB, ZigBee, and the like. The access point may further include a processor 430 for controlling the wireless service 500 and for accessing and executing program code stored in memory 535. The radio interface 540 may further include other components, such as filters, converters (e.g., digital-to-analog converters and the like), mappers, a Fast Fourier Transform (FFT) module, and the like, to generate symbols for a transmission via one or more downlinks and to receive symbols (e.g., via an uplink).

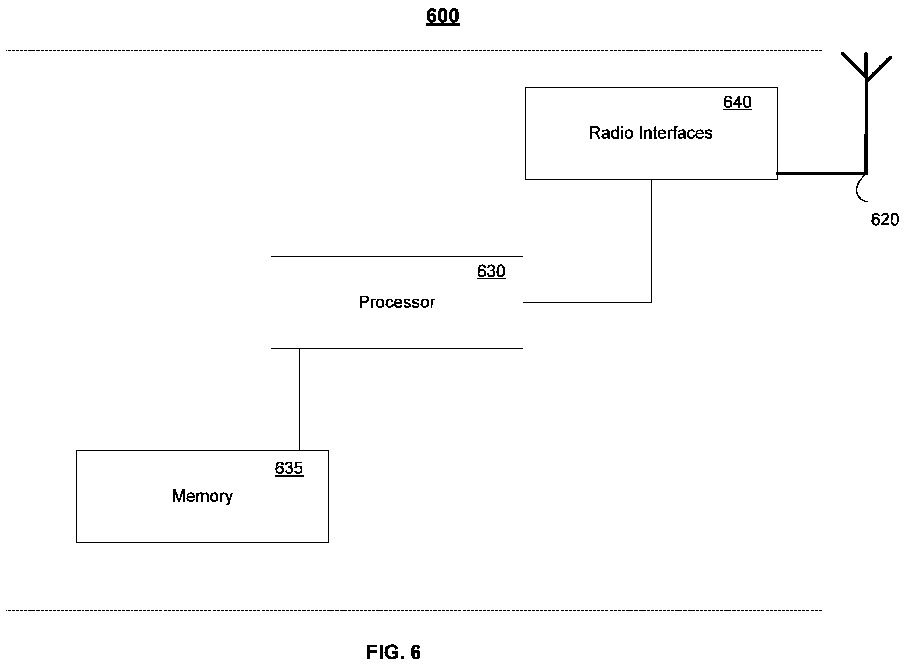

FIG. 6 depicts a block diagram of a radio 600, such as user equipment 114. The user equipment 114 may include an antenna 620 for receiving a downlink and transmitting via an uplink. The user equipment 114 may also include a plurality of radio interfaces 640 coupled to the antenna 620. The radio interfaces may correspond to a plurality of radio access technologies including, LTE or any other cellular technology, WLAN technology, such as WiFi (e.g., the IEEE 802.11 series of standards), WiMAX (e.g., the IEEE 802.16 family of standards), Bluetooth, RFID, UWB, ZigBee, and the like. The radio interfaces 640 may include other components, such as filters, converters (e.g., digital-to-analog converters and the like), symbol demappers, signal shaping components, an Inverse Fast Fourier Transform (IFFT) module, and the like, to process symbols, such as OFDMA symbols, carried by a downlink or an uplink. The user equipment 114 may further include at least one processor, such as processor 630, for controlling user equipment 114 and for accessing and executing program code stored in memory 635. Moreover, the memory 635 may include code, which when executed by at least one processor provides middleware 205B.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "machine-readable medium" refers to any computer program product, computer-readable medium, computer-readable storage medium, apparatus and/or device (e.g., magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although some of the examples described herein refer to the use of specific technologies, such as LTE, WiFi, and the like, the subject matter described herein is not limited to those technologies, and, as such, can be used with other radio technologies as well.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. In addition, the logic flow depicted in the accompanying figures and/or described herein does not require the particular order shown, or sequential order, to achieve desirable results. Other embodiments may be within the scope of the following claims.

## Claims

1. A method comprising:
receiving, at a selector (205B), data representative of at least one of a quality of service requirement of an application (205A) and a user preference associated with the application at a user equipment (114), wherein the selector comprises middleware (205B) interfacing the application with at least one connection (212A, 212B);
selecting, at the selector and based on all the received data, the at least one connection to provide the application access to a service (199A, 199B, 299A, 299B); and
initiating, at the selector, establishment of the at least one connection to provide the application access to the service to enable a synchronization between the application and the service;
the method being **characterized in that** the received data further comprise a speed of the user equipment.

2. The method of claim 1, wherein the received data further comprises at least one of a location of the user equipment, a received signal quality of an access point, and a periodic performance indicator.

3. A method as in any of claims 1-2, wherein the service comprises a remote service accessible coupled to the Internet.

4. A method as in any of claims 1-3, wherein the at least one connection is selected from among a plurality of wireless connections each coupling the user equipment to an access point further coupled by at least the Internet to the service.

5. An apparatus (600) comprising:
at least one processor (630); and
at least one memory (635) including code which when executed by the at least one processor (630) causes operations comprising:
receiving, in a selector, data representative of at least one of a quality of service requirement of an application and a user preference associated with the application at a user equipment, wherein the selector comprises middleware interfacing the application with at least one connection, the received data further comprising a speed of the user equipment;
selecting, in the selector, based on all the received data, the at least one connection to provide the application access to a service; and
initiating, in the selector, establishment of the at least one connection to provide the application access to the service to enable a synchronization between the application and the service,
wherein the user equipment comprises the apparatus,
the apparatus being **characterized in that** the received data further comprise a speed of the user equipment.

6. The apparatus (600) of claim 5, wherein the data further comprises at least one of a location of the user equipment, a received signal quality of an access point, and a periodic performance indicator.

7. An apparatus (600) as in any of claims 5-6, wherein the service comprises a remote service accessible coupled to the Internet.

8. An apparatus (600) as in any of claims 5-7, wherein the code, when executed by the at least one processor (630), causes at least one connection to be selected from among a plurality of wireless connections each coupling the user equipment to an access point further coupled by at least the Internet to the service.

9. A computer-readable medium encoded with instructions that when executed by at least one processor cause performance of a method according to at least one of claims 1-4.

## Patentansprüche

1. Verfahren, umfassend:
- Empfangen von Daten bei einer Auswahlvorrichtung (205B), die wenigstens für eine Dienstgüteanforderung einer Anwendung (205A) oder eine Nutzerpräferenz repräsentativ sind, welche mit der Anwendung bei einem Nutzergerät (114) verknüpft sind, wobei die Auswahlvorrichtung eine Middleware (205B) umfasst, die die Anwendung mit wenigstens einer Verbindung (212A, 212B) koppelt;
- Auswählen, bei der Auswahlvorrichtung und basierend auf allen empfangenden Daten, der wenigstens einen Verbindung, um den Anwendungszugriff auf einen Dienst (199A, 199B, 299A, 299B) bereitzustellen; und
- Einleiten, bei der Auswahlvorrichtung, einer Errichtung der wenigstens einen Verbindung, um den Anwendungszugriff auf den Service bereitzustellen, um eine Synchronisierung zwischen der Anwendung und dem Dienst zu ermöglichen;
- wobei das Verfahren **dadurch gekennzeichnet ist, dass** die empfangenden Daten ferner eine Geschwindigkeit des Nutzergerätes umfassen.

2. Verfahren gemäß Anspruch 1, wobei die empfangenden Daten ferner wenigstens einen Standort des Nutzergerätes, eine empfangende Signalqualität eines Zugangspunktes oder eine periodische Leistungskennzahl umfassen.

3. Verfahren gemäß einem der Ansprüche 1-2, bei dem der Dienst einen mit dem Internet zugänglich verbundenen Ferndienst umfasst.

4. Verfahren gemäß einem der Ansprüche 1-3, wobei die wenigstens eine Verbindung aus einer Vielzahl drahtloser Verbindungen ausgewählt ist, die jeweils das Nutzergerät an eine Zugangsstelle koppeln, die ferner durch wenigstens das Internet mit dem Dienst gekoppelt ist.

5. Vorrichtung (600) umfassend:
- wenigstens einen Prozessor (630); und
- wenigstens einen Speicher (635) mit einem Kode, der, wenn er von dem wenigstens einen Prozessor (630) ausgeführt wird, Operationen verursacht, die umfassen:
- Empfangen von Daten in einer Auswahlvorrichtung, die wenigstens für die Dienstgüteanforderung einer Anwendung oder eine Nutzerpräferenz repräsentativ sind, welche mit der Anwendung bei einem Nutzergerät verknüpft sind, wobei die Auswahlvorrichtung eine Middleware umfasst, die die Anwendung mit wenigstens einer Verbindung koppelt, wobei die empfangenden Daten ferner eine Geschwindigkeit des Nutzergerätes umfassen;
- Auswählen, in der Auswahlvorrichtung, basierend auf allen empfangenden Daten, der wenigstens einen Verbindung, um den Anwendungszugriff auf einen Dienst bereitzustellen; und
- Einleiten, in der Auswahlvorrichtung, einer Errichtung der wenigstens einen Verbindung, um den Anwendungszugriff auf den Dienst bereitzustellen, um eine Synchronisierung zwischen der Anwendung und dem Dienst zu ermöglichen,
- wobei das Nutzergerät die Vorrichtung umfasst, wobei die Vorrichtung **dadurch gekennzeichnet ist, dass** die empfangenden Daten ferner eine Geschwindigkeit des Nutzergerätes umfassen.

6. Vorrichtung (600) gemäß Anspruch 5, bei der die Daten ferner wenigstens einen Standort des Nutzergerätes, eine empfangende Signalqualität eines Zugangspunktes oder eine periodische Leistungskennzahl umfassen.

7. Vorrichtung (600) gemäß einem der Ansprüche 5-6, wobei der Dienst einen mit dem Internet zugänglich verbundenen Ferndienst umfasst.

8. Vorrichtung (600) gemäß einem der Ansprüche 5-7, wobei der Kode, wenn er von dem wenigstens einen Prozessor (630) ausgeführt wird, veranlasst, dass wenigstens eine Verbindung aus einer Anzahl von drahtlosen Verbindungen ausgewählt wird, die jeweils das Nutzergerät mit einer Zugangsstelle koppeln, die ferner durch wenigstens das Internet mit dem Dienst gekoppelt ist.

9. Computerlesbares Medium, das mit Anweisungen verschlüsselt ist, die, wenn sie durch den wenigstens einen Prozessor ausgeführt werden, eine Durchführung eines Verfahrens gemäß wenigstens einem der Ansprüche 1-4 verursachen.

## Revendications

1. Procédé, comprenant les étapes consistant à :
recevoir, sur un sélecteur (205B), des données représentant au moins une exigence de qualité de service d'une application (205A) et une préférence d'utilisateur associée à l'application sur un équipement d'utilisateur (114), dans lequel le sélecteur comprend un interlogiciel (205B) interfaçant l'application à l'aided'au moins une connexion (212A, 212B) ;
sélectionner, au niveau du sélecteur et en fonction de toutes les données reçues, la au moins une connexion pour fournir l'accès à l'application à un service (199A, 199B, 299A, 299B) ;
et
initialiser, au niveau du sélecteur, l'établissement de la au moins une connexion pour fournir l'accès à l'application au service de façon à permettre une synchronisation entre l'application et le service ;
le procédé étant **caractérisé en ce que** les données reçues comprennent en outre une vitesse de l'équipement d'utilisateur.

2. Procédé selon la revendication 1, dans lequel les données reçues comprennent en outre au moins l'un d'une localisation de l'équipement d'utilisateur, de la qualité de signal reçu d'un point d'accès, et d'un indicateur périodique de performance.

3. Procédé selon l'une quelconque des revendications 1 et 2, dans lequel le service comprend un service à distance accessible couplé à l'internet.

4. Procédé selon l'une quelconque des revendications 1 à 3, dans lequel la au moins une connexion est sélectionnée parmi une pluralité de connexions sans fil couplant chacune l'équipement d'utilisateur à un point d'accès couplé en outre au service au moins par l'internet.

5. Dispositif (600), comprenant :
au moins un processeur (630) ; et
au moins une mémoire (635) contenant un code qui permet, lors qu'exécuté par le au moins un processeur (630), d'effectuer des opérations qui comprennent :
la réception, dans un sélecteur, de données représentant au moins une exigence de qualité de service d'une application et une préférence d'utilisateur associée à l'application sur un équipement d'utilisateur, dans lequel le sélecteur comprend un interlogiciel interfaçant l'application avec au moins une connexion, les données reçues comprenant en outre une vitesse de l'équipement d'utilisateur ;
la sélection, dans le sélecteur, basée sur toutes les données reçues, de la au moins une connexion pour fournir l'accès à application au service ; et
l'initialisation, dans le sélecteur, de l'établissement de laau moins une connexion pour fournir l'accès à application au service afin de permettre une synchronisation entre l'application et le service,
dans lequel l'équipement d'utilisateur comprend le dispositif, le dispositif étant **caractérisé en ce que** les données reçues contiennent en outre une vitesse de l'équipement d'utilisateur.

6. Dispositif (600) selon la revendication 5, dans lequel les données comprennent en outre au moins l'un d'une localisation de l'équipement d'utilisateur, d'une qualité de signal reçu d'un point d'accès et d'un indicateur périodique de performance.

7. Dispositif (600) selon l'une quelconque des revendications 5 et 6, dans lequel le service comprend un service à distance accessible couplé à l'internet.

8. Dispositif (600) selon l'une quelconque des revendications 5 à 7, dans lequel le code, lorsqu'il est exécuté par le au moins processeur (630), provoque la sélection d'au moins une connexion parmi une pluralité de connexions sans fil couplant chacune l'équipement d'utilisateur à un point d'accès couplé en outre au service au moins par l'internet.

9. Support lisible par ordinateur encodé par des instructions qui, après exécution par au moins un processeur, permet de mettre en oeuvre un procédé selon au moins l'une des revendications 1 à 4.
